# EUROPEAN PATENT SPECIFICATION

(11) **EP 1 066 959 B1**
(45) Date of publication and mention of the grant of the patent: **23.01.2002**
(21) Application number: 00103539.3
(22) Date of filing: 18.02.2000
(51) Int. Cl.: B32B 27/12, A63B 41/08

(54) **Inflatable stitched sports ball and method of making same**
Aufblasbarer genähter Sportball und Verfahren zu seiner Herstellung
Ballon de sport cousu et gonflable et sa méthode de fabrication

(43) Date of publication of application: 10.01.2001
(73) Proprietor: Joyful Long International Limited, Tsimshatsui, Kowloon (HK)
(72) Inventor: Chan, Chong Veng, Tsimshatsui, Kowloon (HK)
(74) Representative: Nuss, Pierre

(56) References cited:
- EP-A- 0 598 542
- US-A- 4 856 781
- US-A- 5 759 123
- US-A- 6 039 662

## Description

This invention relates to inflatable, multi-panel, stitched sports balls and methods for making same.

Inflatable sports balls, such as soccer balls, volleyballs, and handballs, consist of an outer body in the form of a sphere and an inflatable bladder disposed therein. Sports balls of this type are often formed by joining discrete panels together, e.g. by stitching, along their respective adjacent edges. Shishido et al. in U.S. Patent No. 4,856,781, suggest use of a sewing or stitching machine to join the panels together. EP 0598542 describes an inflatable sports ball which comprises an inflatable bladder and an outer case surrounding the bladder, said outer case being built-up from a multiplicity of separate panels which are stitched together with hard sewing. Each panel of the outer case is formed of a laminate having different comporent layers which are all adhesively united together by means of adhesives having a natural latex base. The component layers consist of an outer wearing layer, an intermediate layer of expanded plastic material, an intermediate women textile layer, incorporate between the fabric layer and the intermediate layer, and a further inner fabric layer made from women material, this layer been preferably composed of two superposed fabric layers.

To enhance durability, and to resist enlargement of the ball over time, e.g. due to action of the compressed air contained within the bladder, a sports ball may have a wound core, i.e., an inflatable bladder covered with windings of thread, e.g. nylon yarn.

According to one aspect of the invention, an inflatable sports ball has a body comprising a multiplicity of discrete panels joined together at seams along respective adjacent edges by machine stitching to define a volume, and an inflatable bladder disposed within the volume and having a valve extending through an aperture defined in the outer surface of the body. Each panel of the multiplicity of panels is formed of a multi-layer laminate comprising: an outer layer of synthetic polymeric material; an intermediate layer of expanded synthetic polymeric material with a woven or knitted fabric backing of said material; and at least one inner layer of woven fabric.

Preferred embodiments of this aspect of the invention may include one or more of the following additional features. The inner layer of woven fabric comprises two layers of woven fabric. The bladder is formed of resilient material. The bladder is joined to an inner surface of the body in a region about the valve stem.

The sports ball can be a soccer ball (football), a volleyball or a handball.

According to another aspect of the invention, a method for manufacture of an inflatable sports ball comprising a body formed of a multiplicity of discrete panels and containing an inflatable bladder, as for example a ball as described before, comprises the steps of: forming a laminate comprising an outer layer of synthetic polymeric material, an intermediate layer of expanded synthetic polymeric material with a woven or knitted fabric backing of said material, and at least one inner layer of woven fabric; cutting the laminate into a plurality of panels of appropriate shape and size, each panel having an inner surface and an outer surface; placing a pair of panels with respective outer surfaces in face to face engagement, and, using a stitching machine, joining the pair of panels at a seam along their respective adjacent edges; repeating the previous step with additional pairs of panels to form an assembly of panels having the shape of a sports ball body and defining a volume; reversing the assembly of panels through an opening in the assembly of panels to form a sports ball body defining a volume; inserting an inflatable bladder through the opening into the volume of the sports ball body; positioning a valve stem of the bladder through an aperture provided in the sports ball body; joining together opposed surfaces of the bladder and sports ball body within the volume in a region about the valve stem; and securing the opening into the sports ball body.

Preferred embodiments of this aspect of the invention may include one or more of the following additional features. The method comprises the further step of trimming the exposed end of the valve stem to adjacent the outer surface of the sports ball body. The method comprises the further step of securing the opening in the sports ball body by hand stitching. The opening comprises an open seam in the sports ball body.

The details of one or more embodiments of the invention are set forth in the accompanying drawings and the description below. Other features, objects, and advantages of the invention will be apparent from the description and drawings, and from the claims.

In the enclosed drawings:
Fig. 1 is a perspective view of an inflatable, multi-panel, stitched sports ball, in this case, a soccer ball, of the invention;
Fig. 2 is an exploded view of a laminate sheet for forming the inflatable, multi-panel, stitched sports ball of Fig. 1;
Fig. 3 is a side section view of the laminate sheet of Fig. 2;
Figs. 4 and 5 are somewhat diagrammatic views of panels cuts from the laminate sheet of Figs. 2 and 3 for forming the inflatable, multi-panel, stitched sports ball of Fig. 1, e.g. a soccer ball and a volley ball, respectively, by the method of the invention;
Figs. 6, 7 and 8 are sequential, somewhat diagrammatic views of steps of the method of the invention for joining adjacent panels by machine stitching to form a multi-panel assembly during manufacture of the inflatable sports ball of Fig. 1. In Fig. 6, two adjacent panels are oriented with outer surfaces in opposed relationship; in Fig. 7, the two panels are joined by machine stitching along respective adjacent edges to form a multi-panel assembly; and, in Fig. 8, the outer surface of the multi-panel assembly of Fig. 7 is shown.

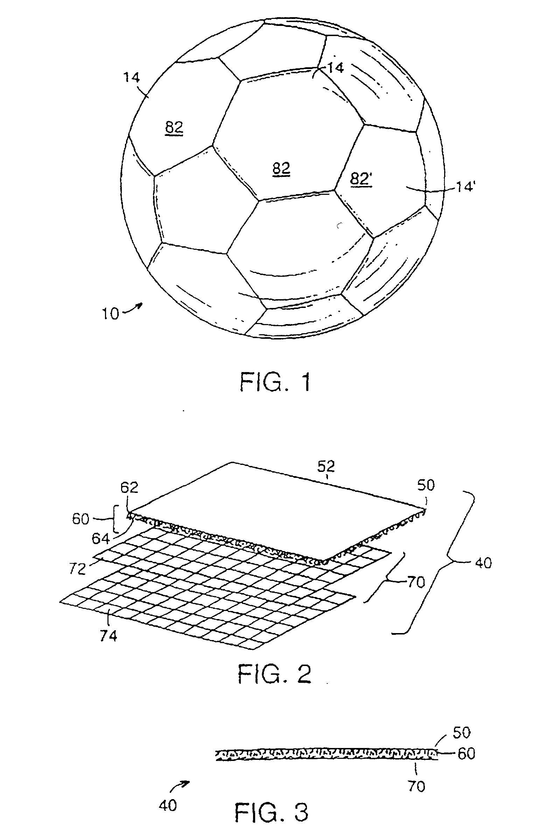

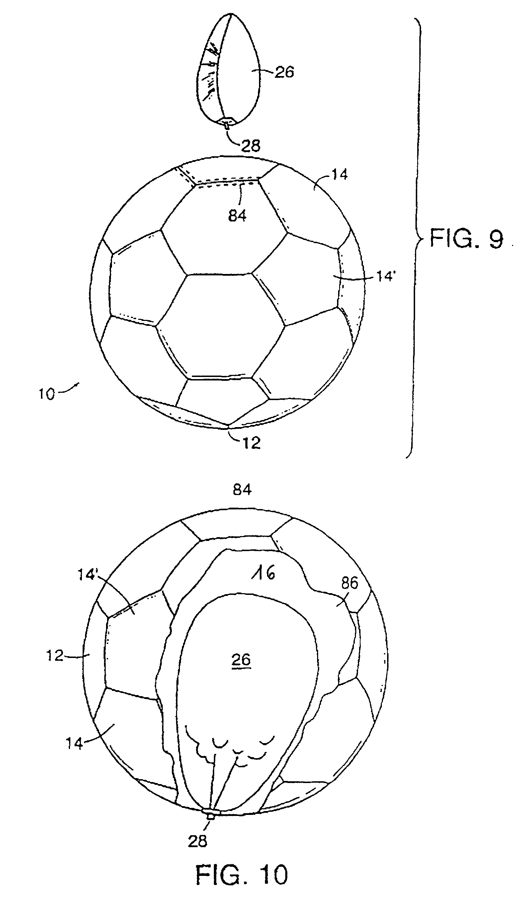

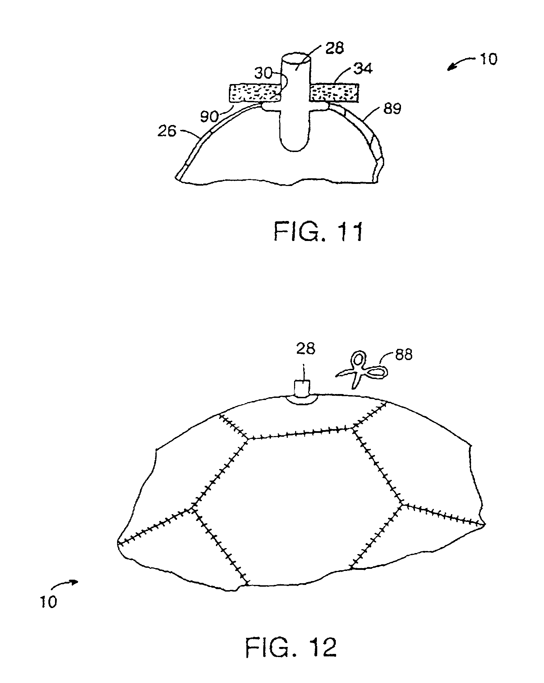

Figs. 9, 10, 11 and 12 are sequential, somewhat diagrammatic views of method of the invention for assembling an inflatable sports ball of Fig. 1. In Fig. 9, the inflatable bladder is positioned for insertion through an open seam into the volume of the body of a multi-panel, machine stitched sports ball; in Fig. 10, the bladder is positioned within the sports ball body (shown partially in section), with the valve stem disposed to extend through an aperture in the ball body surface; in Fig. 11, the body and bladder (both shown partially in section) are secured together about the region of the valve stem; and, in Fig. 12, excess valve stem extending from the surface of the ball is trimmed.

Like reference symbols in the various drawings indicate like elements.

Referring to Figs. 1 and 9-12, an inflatable sports ball 10 has a body 12 formed of a multiplicity of discrete panels 14, 14' defining a volume 16. The panels are joined together at a seam 18 along respective adjacent edges 20, 22 by machine stitching 24. An inflatable bladder 26 is disposed within the volume. The bladder has a valve stem 28 extending through an aperture 30 defined in the outer surface 34 of the ball body.

Each panel 14, 14', 14" is formed of a multi-layer laminate 40 consisting of an outer layer 50, e.g. of synthetic polymeric material 52, an intermediate layer 60, e.g. of expanded synthetic polymeric material 62 and a woven fabric 64 backing of said material 62, and at least one inner layer 70, e.g. preferably of two woven fabric layers 72, 74.

Referring now to Figs 2-12, a method for manufacture of the inflatable sports ball 10 discussed above will next be described.

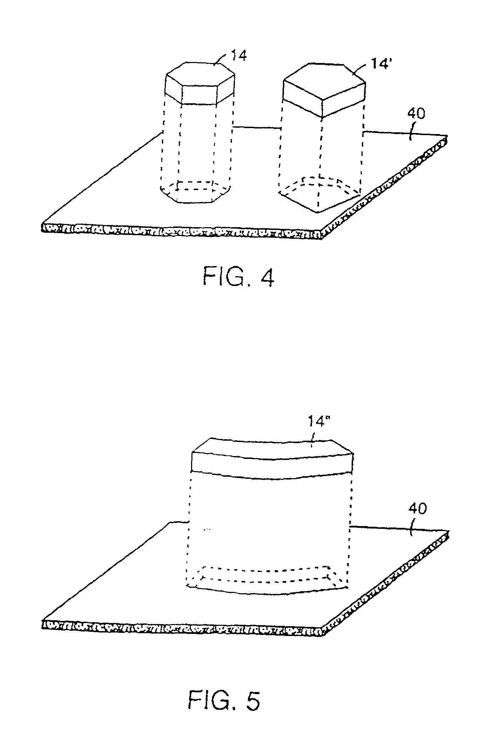

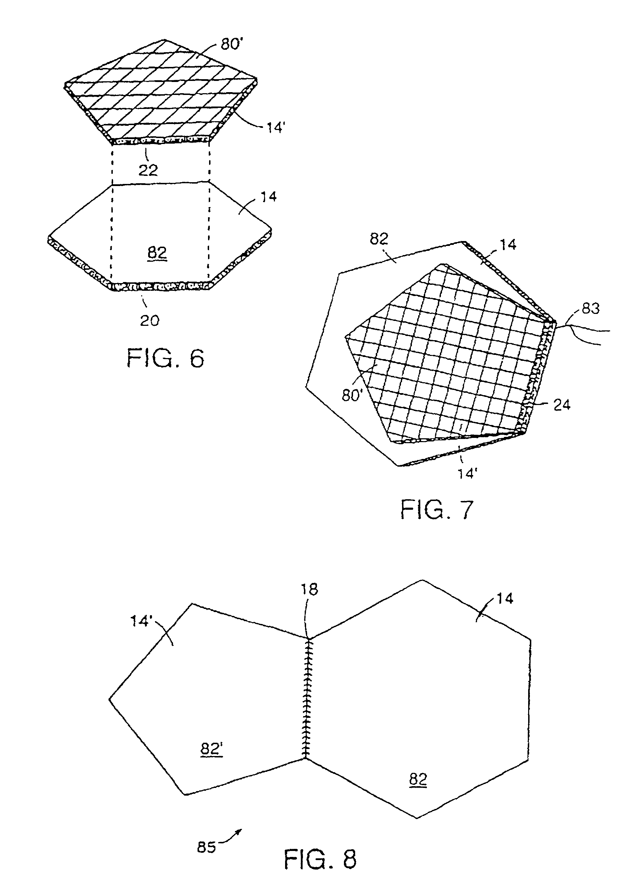

First, a laminate 40 (Figs. 2 and 3) is formed by methods known to those skilled in the art. The laminate consists of an outer layer 50, e.g. of synthetic polymeric material, an intermediate layer 60, e.g. of expanded synthetic polymeric material and a woven fabric backing of said material, and at least one inner layer 70, e.g. preferably of two layers of woven fabric. The laminate is cut into a plurality of panels 14, 14', 14" of appropriate shape and size (Figs. 4 and 5), each panel having an inner surface 80 and an outer surface 82. A pair of panels 14, 14' is placed with their outer surfaces 82, 82', respectively, in face-to-face engagement (Fig. 6). Using a stitching machine 83, the pair of panels is joined at the seam 18 along their respective adjacent edges (Fig. 7) to form a multi-panel assembly 85 (Fig. 8). The step of joining pairs of panels at the seam along their adjacent edges is repeated for additional pairs of panels (including panels already joined in other pairs of panels) to form an assembly of panels having the shape of a sports ball body and defining a volume (the assembly at this stage having the panel outer surfaces facing into the volume to facilitate machine stitching of the seams). The assembly of panels thus formed are next reversed through an open seam 84 in the assembly of panels, e.g. typically through an opening between the adjacent edges of one pair of panels, to form a sports ball body defining a volume 16 (the assembly of panels by this operation now having the panel inner surfaces facing into the volume, the process of machine stitching having been essentially completed).

An inflatable bladder 26 is inserted through the open seam 84 into the volume 16 of the sports ball body 12 (Figs. 9 and 10). The valve stem 28 of the bladder is positioned to extend through the aperture 30 provided in the outer surface of the sports ball body. The opposed surfaces 89, 90 of the bladder and the inner surface of the sports ball body, respectively, are secured together, e.g. with adhesive, in the region about the valve stem, to secure the position of the bladder within the body (Fig. 11). The valve stem 28 extending beyond the surface of the ball is trimmed, e.g. with scissors 88.

The open seam 84 in the sports ball body 12 is then secured, e.g. by hand stitching.

In preferred embodiments, the synthetic material of the laminate 50 (Fig. 3) is high foamed PVC (poly vinyl chloride), has a thickness between 1,6 to 2,5 mm, preferably 2,2 mm, for soccer balls, 1,8 mm for volley balls, and a weight of between 900 to 1600 g, preferably 1600 g, for soccer balls, 940 g for volley balls, for a sheet 54 inches (1372 mm) by 36 inches (914 mm) at 2,2 mm thickness. The softness depends on the density of the laminate material, i.e. the degree of porosity, which can be varied to accommodate the requirements of the purchaser. The fabric 62 (Fig. 2) of the preferred laminate is poly/viscose, having a yarn count of 13s/2 by 13s/2, a warp and weft of 29 by 29, and a weight of 210 to 215 g per square meter for soccer balls, 235 to 240 g per square meter for volley balls. The outer laminate layer 62 (Fig. 2) is between 0,25 to 0,30 mm thick, preferably 0,30 mm thick. The intermediate layer is formed with a foaming rate of between 1:2 to 1:2,2, preferably 1:2 for soccer balls, 1:2,2 for volleyballs. The T/R woven or knitted fabric backing of the inner layer has a weight of 10 pounds (4536 g) . The bladder is formed of 70 to 80% butyl rubber with 20 to 30% natural rubber. The preferred adhesive used in forming the laminate is not less than 60% purity of latex.

The result is an inflatable sports ball with a softer feeling and more comfort to a human body striking or struck by the ball, e.g. during play. This is compared to prior art inflatable sports balls with cores formed of windings of thread, e.g. nylon yarns, acting as a reinforcing layer to minimize circumferential enlargement of the ball, and to improve durability. Replacement of the windings in the inflatable sports ball of the invention also allows the ball to keep its proper roundness when deflated and them re-inflated. This is in contrast to prior art inflatable sports balls with cores of windings of thread in which, upon re-inflation, friction between winding threads and the cover can cause de-shaping of panels to make the ball out of roundness.

The method of the present invention also permits considerable reduction in production time and costs. For example, a typical skilled worker can hand-stitch, on average, four pieces per day. In contrast, a skilled worker using the method of the present invention employing stitching machines can produce hundreds of pieces in the same time period.

Incorporation of the fabric layers "within the laminate of the body of the sports ball also results in considerable savings of production time and cost, e.g. as compared to prior art sports balls in which the inflatable bladder is formed of stitched fabric panels.

The inflatable sports ball of the invention is also durable, e.g. due to the layers of fabric incorporated into the laminate of the body of the ball, and due to the layer of expanded synthetic material, which serves to absorb impact upon the outer surface of the ball. The rebound is also more moderate and falls within the FIFA specification, if so required.

A number of embodiments of the invention have been described. Nevertheless, it will be understood that various modifications may be made. For example, the synthetic material of the laminate may be a combination of polyurethane and poly vinyl chloride. The fabric of the laminate may be a combination of polyester and poly rayon, with a yarn count of 32s/2+2 by 32s/2+2, and a warp and weft of 25 by 25. The bladder may be formed of 100% latex.

## Claims

1. An inflatable sports ball (10) having a body (12) comprising:
a multiplicity of discrete panels (14, 14', 14") joined together at seams (18) along respective adjacent edges (20, 22) by machine stitching to define a volume (16), and
an inflatable bladder (26) disposed within said volume and having a valve (28) extending through an aperture (30) defined in the outer surface (34) of said body,
each panel of said multiplicity of panels being
formed of a multi-layer laminate (40) comprising:
an outer layer (50) of synthetic polymeric material;
an intermediate layer (60) of expanded synthetic polymeric material (62) with a woven or knitted fabric (64) backing of said material (62);
at least one inner layer (70 ; 72, 74) of woven fabric.

2. The inflatable sports ball of claim 1, wherein said inner layer of woven fabric comprises two layers of woven fabric (72 and 74).

3. The inflatable sports ball of claim 1, wherein said bladder (26) is formed of resilient material.

4. The inflatable sports ball of claim 1, wherein said bladder (26) is joined to an inner surface of said body in a region about said valve stem (28), by securing together with adhesive opposed surfaces (89, 90) of the bladder and of the inner surface of the sports bell body.

5. The inflatable sports ball of claim 1, wherein said sports ball is a soccer ball.

6. The inflatable sports ball of claim 1, wherein said sports ball is a volleyball.

7. A method for manufacture of an inflatable sports ball comprising a body formed of a multiplicity of discrete panels and containing an inflatable bladder, said method comprising the steps of:
forming a laminate (40) comprising an outer layer (50) of synthetic polymeric material (52), an intermediate layer (60) of expanded synthetic polymeric material (62) with a woven fabric (64), backing of said material (62), and at least one inner layer (70)of woven fabric; cutting the laminate into a plurality of panels (14, 14', 14") of appropriate shape and size, each panel having an inner surface (80) and an outer surface (82) ;
placing a pair of panels (14, 14') with respective outer surfaces in face-to-face engagement, and, using a stitching machine (83), joining the pair of panels at a seam (18) along their respective adjacent edges;
repeating the previous step with additional pairs of panels to form an assembly of panels having the shape of a sports ball body and defining a volume; reversing the assembly of panels through an opening in the assembly of panels to form a sports ball body (12) defining a volume (16);
inserting an inflatable bladder (26) through the opening into the volume of the sports ball body; positioning a valve stem (28) of the bladder through an aperture (30) provided in the sports ball body; joining together opposed surfaces (89, 90) of the bladder and sports ball body within the volume in a region about the valve stem and
securing the opening into the sports ball body.

8. The method of claim 7 comprising the further step of trimming the exposed end of the valve stem to adjacent the outer surface of the sports ball body.

9. The method of claim 7 comprising the further step of securing the opening in the sports ball body by hand stitching.

10. The method of claim 7 wherein the opening comprises an open seam (84) in the sports ball body.

## Patentansprüche

1. Aufblasbarer Sportball (10) mit einem Körper (12), umfassend:
eine Vielzahl von einzelnen Abschnitten (14, 14', 14"), die an Nähten (18) entlang jeweiliger benachbarter Kanten (20, 22) durch Maschinennähen aneinandergefügt sind, um ein Volumen (16) festzulegen, und
eine aufblasbare Blase (26), die innerhalb des Volumens angeordnet ist und ein Ventil (28) aufweist, das sich durch eine Öffnung (30) erstreckt, die in der Außenfläche (34) des Körpers festgelegt ist,
wobei jeder Abschnitt der Vielzahl von Abschnitten aus einem mehrlagigen Laminat (40) ausgebildet ist, welches folgendes umfaßt:
eine äußere Schicht (50) aus einem synthetischen Polymermaterial;
eine Zwischenschicht (60) aus einem aufgeblähten synthetischen Polymermaterial (62) mit einer Gewebe- oder Gewirk- (64) Unterlage des Materials (62);
mindestens eine innere Schicht (70; 72, 74) aus Gewebe.

2. Aufblasbarer Sportball nach Anspruch 1, wobei die innere Schicht aus Gewebe zwei Schichten aus Gewebe (72 und 74) umfaßt.

3. Aufblasbarer Sportball nach Anspruch 1, wobei die Blase (26) aus einem elastischen Material ausgebildet ist.

4. Aufblasbarer Sportball nach Anspruch 1, wobei die Blase (26) mit einer inneren Oberfläche des Körpers in einem Bereich um den Ventilschaft (28) durch Befestigen von gegenüberliegenden Oberflächen (89, 90) der Blase und der inneren Oberfläche des Sportballkörpers mit Klebstoff aneinander verbunden ist.

5. Aufblasbarer Sportball nach Anspruch 1, wobei der Sportball ein Fußball ist.

6. Aufblasbarer Sportball nach Anspruch 1, wobei der Sportball ein Volleyball ist.

7. Verfahren zur Herstellung eines aufblasbaren Sportballs mit einem Körper, der aus einer Vielzahl von einzelnen Abschnitten ausgebildet ist und eine aufblasbare Blase enthält, wobei das Verfahren die folgenden Schritte umfaßt:
Ausbilden eines Laminats (40) mit einer äußeren Schicht (50) aus einem synthetischen Polymermaterial (52), einer Zwischenschicht (60) aus einem aufgeblähten synthetischen Polymermaterial (62) mit einer Gewebe- (64) Unterlage des Materials (62), und mindestens einer inneren Schicht (70) aus Gewebe;
Schneiden des Laminats in eine Vielzahl von Abschnitten (14, 14', 14") mit geeigneter Form und Größe,
wobei jeder Abschnitt eine innere Oberfläche (80) und eine äußere Oberfläche (82) aufweist;
Anordnen eines Paars von Abschnitten (14, 14') mit den jeweiligen äußeren Oberflächen in einander zugewandtem Eingriff, und Verbinden des Paars von Abschnitten an einer Naht (18) entlang ihrer jeweiligen benachbarten Kanten unter Verwendung einer Nähmaschine (83);
Wiederholen des vorherigen Schritts mit zusätzlichen Paaren von Abschnitten, um eine Anordnung aus Abschnitten mit der Form eines Sportballkörpers, die ein Volumen festlegt, auszubilden;
Umwenden der Anordnung von Abschnitten durch eine Öffnung in der Anordnung von Abschnitten, um einen Sportballkörper (12), der ein Volumen (16) festlegt, auszubilden;
Einfügen einer aufblasbaren Blase (26) durch die Öffnung in das Volumen des Sportballkörpers;
Positionieren eines Ventilschafts (28) der Blase durch eine Öffnung (30), die in dem Sportballkörper vorgesehen ist;
Aneinanderfügen von gegenüberliegenden Oberflächen (89, 90) der Blase und des Sportballkörpers innerhalb des Volumens in einem Bereich um den Ventilschaft; und
Befestigen der Öffnung in dem Sportballkörper.

8. Verfahren nach Anspruch 7, welches den weiteren Schritt des Beschneidens des freistehenden Endes des Ventilschafts angrenzend an die äußere Oberfläche des Sportballkörpers umfaßt.

9. Verfahren nach Anspruch 7, welches den weiteren Schritt des Befestigens der Öffnung in dem Sportballkörper durch Handnähen umfaßt.

10. Verfahren nach Anspruch 7, wobei die Öffnung eine offene Naht (84) in dem Sportballkörper umfaßt.

## Revendications

1. Ballon de sport gonflable (10) comportant un corps (12) comprenant :
une multiplicité de panneaux séparés (14, 14', 14") réunis ensemble au niveau de coutures (18) le long de bords adjacents respectifs (20, 22) par piqûre à la machine afin de définir un volume (16), et
une vessie gonflable (26) disposée à l'intérieur dudit volume et comportant une valve (28) s'étendant à travers une ouverture (30) définie dans la surface extérieure (34) dudit corps,
chaque panneau de ladite multiplicité de panneaux étant fabriqué à partir d'un stratifié à couches multiples (40) comprenant :
une couche extérieure (50) de matière polymère synthétique,
une couche intermédiaire (60) de matière polymère synthétique expansée (62) avec une étoffe tissée ou tricotée (64) au dos de la dite matière (62),
au moins une couche intérieure (70 ; 72, 74) d'étoffe tissée.

2. Ballon de sport gonflable selon la revendication 1, dans lequel ladite couche intérieure d'étoffe tissée comprend deux couches d'étoffe tissée (72 et 74).

3. Ballon de sport gonflable selon la revendication 1, dans lequel ladite vessie (26) est fabriquée à partir d'une matière élastique.

4. Ballon de sport gonflable selon la revendication 1, dans lequel ladite vessie (26) est jointe à une surface intérieure dudit corps dans une région autour de ladite tige de valve (28), en fixant ensemble grâce à un adhésif des surfaces opposées (89, 90) de la vessie et de la surface intérieure du corps de ballon de sport.

5. Ballon de sport gonflable selon la revendication 1, dans lequel ledit ballon de sport est un ballon de football.

6. Ballon de sport gonflable selon la revendication 1, dans lequel ledit ballon de sport est un ballon de volley-ball.

7. Procédé de fabrication d'un ballon de sport gonflable comprenant un corps fabriqué à partir d'une multiplicité de panneaux séparés et contenant une vessie gonflable, ledit procédé comprenant les étapes consistant à :
former un stratifié (40) comprenant une couche extérieure (50) de matière polymère synthétique (52), une couche intermédiaire (60) de matière polymère synthétique expansée (62) avec une étoffe tissée (64) au dos de ladite matière (62), et au moins une couche intérieure (70) d'étoffe tissée,
découper le stratifié en une pluralité de panneaux (14, 14', 14") de forme et de dimensions appropriées, chaque panneau présentant une surface intérieure (80) et une surface extérieure (82),
placer une paire de panneaux (14, 14') en contact face-à-face avec des surfaces extérieures respectives, et, en utilisant une machine à coudre (83), réunir la paire de panneaux au niveau d'une couture (18) le long de leurs bords adjacents respectifs,
répéter l'étape précédente avec des paires supplémentaires de panneaux afin de former un ensemble de panneaux présentant la forme d'un corps de ballon de sport et définissant un volume,
retourner l'ensemble de panneaux par l'intermédiaire d'une ouverture dans l'ensemble de panneaux afin de former un corps de ballon de sport (12) définissant un volume (16),
insérer une vessie gonflable (26) à travers l'ouverture dans le volume du corps du ballon de sport,
positionner une tige de valve (28) de la vessie à travers une ouverture (30) ménagée dans le corps du ballon de sport,
réunir ensemble des surfaces opposées (89, 90) de la vessie et du corps du ballon de sport à l'intérieur du volume dans une région autour de la tige de valve, et
fixer l'ouverture dans le corps du ballon de sport.

8. Procédé selon la revendication 7 comprenant l'étape supplémentaire consistant à couper l'extrémité exposée de la tige de valve jusqu'à proximité de la surface extérieure du corps du ballon de sport.

9. Procédé selon la revendication 7 comprenant l'étape supplémentaire consistant à fixer l'ouverture dans le corps du ballon de sport par couture à la main.

10. Procédé selon la revendication 7 dans lequel l'ouverture comprend une couture ouverte (84) dans le corps du ballon de sport.
